# EUROPEAN PATENT APPLICATION

(11) **EP 3 035 156 A1**
(43) Date of publication of application: **22.06.2016**
(21) Application number: 14307031.6
(22) Date of filing: 15.12.2014
(51) Int. Cl.: G06F 3/01, H04L 12/28, H04L 29/08, H04W 4/00, H04W 4/02, H04W 4/20

(54) **Method and apparatus for remotely controlling an electronic device**

(71) Applicant: Thomson Licensing, 92130 Issy-les-Moulineaux (FR)
(72) Inventor: Lindemann, Robert, 30559 Hannover (DE)
(74) Representative: Huchet, Anne

(57) **Abstract**

A method of remotely controlling a device (104) using a mobile terminal (100), includes, at the mobile terminal (100) detecting a signal source (102) providing an identification and/or connection parameters of the device (104). A wireless communication connection (103) between the mobile terminal (100) and the device (104) is established in response to detecting the signal source (102), and an initial spatial position of the mobile terminal (100) is determined. Subsequent changes in the spatial position of the mobile terminal (100) are detected and translated into at least one new value for at least one controllable parameter of the device (104). The at least one new value is transmitted to the device (104).

## Description

### FIELD

The present method and apparatus relate to remotely controlling electronic devices or appliances.

### BACKGROUND

Modern smartphones, tablet computers and the like are often equipped with one or more of gyroscopes, accelerometers and magnetic field sensors, e.g. for electronic compass function. All of these sensors taken alone or in any combination provide a means for detecting a position of such device in space and/or a change in the position in space. Apart from their use as compass and level these sensors are often also used for controlling games that are displayed on a display of such device. The devices are also equipped with wireless communication interfaces providing connections in accordance with one or more standards defining wireless LAN according to the IEEE 802.11 family, Bluetooth, GSM, UMTS, LTE, Zigbee, Z-Wave, infrared, e.g. IRDA, and the like.

### SUMMARY

The present method uses the above-mentioned sensors provided in mobile terminals for providing an input device for remotely controlling electronic devices or appliances. The present method thus further extends the field of use of mobile terminals that are already in the possession of a user.

The method includes, at the mobile terminal, detecting a signal source providing an identification and/or connection parameters of a particular remotely controllable device. The signal source is, for example, an NFC tag, a QR code or a Bluetooth beacon. The signal from the signal source is preferably only detectable at a short distance, for example within a range of a few centimetres. In other words the mobile terminal preferably is in close proximity of the signal source before the mobile terminal actually detects the signal source. The signal source is not necessarily an integral part of a remotely controllable device. Rather, greater flexibility is achieved when the signal source is placed independent from the remotely controllable device. Typically, a signal source represents a single remotely controllable device. However, it is also possible to use a single signal source for establishing a control connection to multiple remotely controllable devices. In this case a selection needs to be done by a user or automatically based on the context, either local or temporal, i.e. depending on preceding interactions.

Detecting the signal source may be performed automatically or only after receiving a corresponding user input. Automatic detection may be a preferred solution when an NFC tag is used as a signal source. In this case a corresponding RF scan may be performed continuously or at appropriate intervals as a background task of the mobile terminal. NFC tags may be active or passive. In the case of active NFC tags the NFC tag is self-powered and may issue a signal continuously or at intervals. In the case of a passive NFC tag power is provided to the NFC tag by the active scanning process of the mobile terminal. The present method can be used with either type NFC tag.

Detecting the signal source after receiving a corresponding user input may be a preferred solution when a QR codes is used as a signal source. This is mainly a matter of energy consumption of the detection means, since cameras or, more generally optical scanners, typically consume a higher amount of energy during operation than RF scanners, and energy consumption is a big concern in mobile devices.

Detecting the signal source may be enabled by environmental parameters that are otherwise unrelated to the method. For example, the presence of a known and trusted wireless LAN, e.g. the home wireless network SSID, may automatically enable detecting the signal source. This may be useful since in most cases the user will only be controlling remotely controllable devices that are in his or her possession, and such assumption is generally valid in a user's home. Similarly, a geolocation information, e.g. GPS position, may be used for enabling detecting the signal source, or a known and trusted Bluetooth network identifier. The Bluetooth network identifier may be used, for example, for controlling remotely controllable devices and functions in a car. Several different geolocations, trusted WLAN SSIDs or Bluetooth network identifiers may be stored in the mobile terminal.

In response to the signal source being detected, a wireless communication connection between the mobile terminal and the remotely controllable device is established. Parameters required for establishing the wireless communication connection may be provided in the signal itself or are retrieved from a database. In the latter case the signal only needs to represent a unique identification of a remotely controllable device which is used for looking up the corresponding parameters for establishing a wireless location connection in a database. The database may be stored in a memory of the mobile terminal or maybe stored externally to the mobile terminal and accessed via a wireless connection that is generally available and active. The parameters required for establishing the wireless communication connection between the mobile terminal and the remotely controllable device includes, for example, an IP address of the remotely controllable device or any other information required for transmitting data to the remotely controlled device. The parameters depend from the communication means and protocol used, and may also depend on whether or not an intermediary device is used, e.g., a gateway. Parameters for setting up wireless communication connections between the mobile terminal and the remotely controlled device in accordance with one or more of wireless standards such as IEEE 802.11, Bluetooth, ZigBee, Z-Wave, GSM, UMTS, LTE, infrared, etc. are generally known and will not be discussed in detail in this specification. In an embodiment, rather than using different wireless standards between the signal source and the mobile terminal and between the mobile terminal and the remotely controllable device, it is also possible to exclusively use NFC for both purposes.

Once the signal source is detected, and parameters required for establishing the wireless communication connection between the mobile terminal and the remotely controllable device are available, the wireless communication connection between the mobile terminal and the remotely controlled device associated with the signal source may be established automatically, e.g. in immediate response to detecting the signal, or only after receiving a corresponding user input. The user input may simply confirm the user's will to control the remotely controllable device or may represent some form of authentication or authorisation, for example an access code. A user input representing an authorisation or authentication may only be required at the very first time a signal source is detected and may be stored in and subsequently provided from the mobile terminal. It is also possible to maintain a database which keeps records of identifiers of mobile terminals which have permission to control selected ones of the plurality of remotely controllable devices. Such database may be stored in the remotely controllable device, or in a gateway arranged in between the mobile terminal and the remotely controllable device, or even in a separate access control server that can be accessed by the remotely controllable device or the gateway.

Alternatively or in addition to requiring a user input prior to establishing the wireless communication connection, in an embodiment of the present method the wireless communication connection is established only after the signal from the signal source is uninterruptedly detected during a time period that is longer than a predetermined first time period. This may help to make sure that the mobile terminal has not just accidentally passed post a signal source, without the user actually desiring to control the remotely controllable device.

In any of the embodiments of the present method described hereinbefore or hereafter the wireless communication connection is terminated or closed when the signal from the signal source is not detected for a predetermined second time period. Alternatively or in addition the wireless communication connection may be terminated or closed after receiving a corresponding user input and/or after substantially no change in the spatial position of the mobile terminal has been detected within a predetermined third time period.

In accordance with the present method an initial spatial position of the mobile terminal is determined. The mobile terminal is equipped with the one or more sensors generating corresponding signals that allow for performing this task. Sensors that can be used in accordance with the present method include magnetic field sensors which produce signals in accordance with strength and/or direction of the Earth's magnetic field, accelerometers, gyroscopes and/or cameras.

Determining the initial spatial position of the mobile terminal may be performed at any time after detecting the signal source and prior to a point in time where the control action effectively begins. It is for example possible to determine initial spatial position only after the wireless communication connection between the mobile terminal and the remotely controllable device is established and operative, i.e. authentication and authorisation are successfully completed.

In an embodiment of the present method a signal is issued to the user when the initial spatial position has been determined. The signal maybe an acoustic, tactile or optical signal, or a combination thereof. Examples of such signals include sounds, vibration or flashing indicator lights or the display of the mobile terminal.

Once the initial spatial position of the mobile terminal has been determined a subsequent change in the spatial position of the mobile terminal is detected using the sensors mentioned further above.

In an embodiment of the present method detection of the initial spatial position of the mobile terminal and/or detection of changes in the spatial position of the mobile terminal is subject to an appropriate amount of lowpass filtering and/or averaging in order to remove unintended and uncontrollable micro-movements.

Changes in the spatial position of the mobile terminal are translated into one or more new values for one or more corresponding controllable parameters of the remotely controllable device, and are transmitted to the remotely controllable device. The one or more controllable parameters may also be referred to as a modifiable quantity.

The new values for one or more controllable parameters of the remotely controllable device may represent a relative change of the respective controllable parameter. For example a rotational movement in one direction may represent incrementing the controllable parameter by a certain value and a rotational movement in contrary direction may represent decrementing the controllable parameter by a certain value. The certain value may correspond to an increment or decrement of 1 or any other value, either preset or determined in accordance with the amount of rotational movement. The relative change of the corresponding parameter may not only be matched to rotational movements, e.g. horizontal or vertical rotation, but also to translational movements, e.g. left-right, up-down, or back-forth.

In case a new values for one or more controllable parameters of remotely controllable device represent relative changes it is not necessary for the mobile terminal to receive an initial or current value of the one or more controllable parameters before the actual control can begin. Whenever a further increase or decrease of the controllable value is not possible the remotely controllable device will simply ignore further relative changes, and to the user will eventually notice that a limit of the control range is reached.

However, the new values for one or more controllable parameters of the remotely controllable device may be transmitted as absolute values of the respective one or more controllable parameters. In this case the remotely controllable device will transmit, to the mobile terminal, initial or current values of the one or more controllable parameters after the communication connection has been established. The mobile terminal uses this initial or current value as a basis for calculating a new value from the detected change in its spatial position, which new value is then transmitted to the remotely controllable device.

Combinations of both absolute and relative new values may be used for controlling an individual remotely controlled device, depending on the type and number of controllable parameters.

Changes in the spatial position of the mobile terminal may correspond to one or more of translational or rotational movements along or around any of the three axes in the three-dimensional space. Each of the one or more controllable parameters of the remotely controllable device may be mapped onto a corresponding movement of the mobile terminal in the three-dimensional space. A combination of rotational and translational movements may be used for controlling individual controllable parameters of a single remotely controllable device.

For example, if a remotely controllable device allows for a single parameter to be changed, a change of the value of that single parameter may be effected by rotating the mobile terminal around one axis. The value of the single parameter may be changed continuously, e.g. take any value in a range between 0...100%, or in one or more discrete steps. In this example changing the value of the single parameter in a single discrete step may correspond to changing a switch from the on position to the off position or vice versa. Accordingly, changing the value of the single parameter in several discrete steps may correspond to changing the parameter for example in 10%-steps, and continuously changing the single parameter may represent the equivalent of a potentiometer, for example for implementing a dimmer for a lamp.

The translation of the change in the spatial position need not necessarily be linear. Rather, any suitable function, linear, non-linear, monotonous or not, etc., can be applied to map a certain amount of change of the spatial position into a corresponding change of the value of a parameter of a remotely controllable device.

For example, most humans can rotate their hands by approximately 180°, end-to-end. However, a user would typically hold a mobile terminal, e.g. a mobile phone, essentially upright, i.e. in a position in which the long sides of the mobile terminal are oriented substantially vertical. Starting from this position rotation by approximately 90° to the left or 90° to the right is possible. As the user may not necessarily be aware of a current value of the parameter of the remotely controllable device at the time when he or she brings the mobile terminal within detection range of the signal source, the remaining adjustment range of the value towards its lower or upper limits needs to be mapped to a function considering the initial spatial position of the mobile terminal and the capability of the user to rotate his or her hand, from the initial spatial position, to the left or to the right.

Likewise, the speed of the change in the spatial position may be considered when translating the amount of change in the spatial position into a new value. For example, changing from a first spatial position to a second spatial position at a faster rate of change or speed may be translated into a larger change of the value, while the same change performed at a lower speed may be translated into a smaller change of the value.

In one embodiment of the present method the one or more current values of the one or more controllable parameters received from the remotely controllable device are reproduced on a display of the mobile terminal. The parameters may either be produced as numerical values or in a graphical fashion, allowing for a user to identify an available range of control of the parameters. For example, numerical values may be represented as a percentage value between 0 and 100%. Graphical values maybe represented as bar graph, either linear or curved, or as discs having variable sectional filling grades. Numerical and graphical values may also be combined. The numerical or graphical representation of the parameters on the display of the mobile terminal may be updated in accordance with the change in the spatial position of the mobile terminal. Updating the numerical graphical representation of the parameters may be done stepwise or continuously animated, depending, inter alia, from the rate at which the new values are determined and transmitted to the remotely controllable device.

In an embodiment of the present method one or more sets of possible discrete values for one or more of the controllable parameters are transmitted to and displayed on the display of the mobile terminal. Currently selected ones of the possible discrete values for the one or more controllable parameters are identified on the display, e.g., by highlighting. In order to change from a currently selected discrete value to a new discrete value a minimum amount of change in the spatial position of the mobile terminal may be required. The minimum amount of change in the spatial position of the mobile terminal required for changing from one currently selected discrete value to a new discrete value may depend from the speed of change in the spatial position of the mobile terminal.

In case of a control operation that is effected by rotating the mobile terminal, if the control range is too large to be fully covered by the user-adjusted or typical range of rotational motion of a user's hand, one or more full rotations of the mobile terminal may be required. The same is true in case of discrete values selectable by rotating the mobile terminal. For example, if the number of discrete values is too large to be properly arranged in a circle on the display while still being discernible, the items may be arranged along a pseudo-3D helix-like structure, with the next lower or higher level being accessible when a full 360° rotation has been completed. Lower levels of discrete values to select from may be indicated by smaller graphical representations of values, and higher levels of discrete values to select from may be indicated by enlarged representations of values. Values not in the presently controlled range of the helix may be transparent, giving a hint that there are items for selection at a lower or higher level. The helix-like arrangement may additionally be displayed in a perspective providing an impression of depth.

A change of a value in response to a change of the spatial position of the mobile terminal may be notified to the user by acoustical, optical or tactile feedback. For example, in case the method is used to operate a remotely controllable device having two or more discrete switch positions each change to a new switch position may be notified by one or more of a clicking sound, a flashing display and a vibration of the mobile terminal. Similarly, in case the method is used to operate a remotely controllable device providing a continuously variable control, e.g., a lamp dimmer, the feedback may include issuing a sound that increases in volume and or frequency when the values increase, and vice versa.

In one embodiment of the present method the wireless communication connection is established between the mobile terminal and a gateway. The gateway is communicatively connected to one or more of the plurality of remotely controllable devices by corresponding wired or wireless connections. The communication connection between the mobile terminal and the gateway may be different from the communication connection between the gateway and the remotely controllable device, for example using a different standard or protocol. In this embodiment the gateway provides, to the mobile terminal, current values for controllable parameters of the remotely controllable device detected by the mobile terminal. The mobile terminal may use the current values as a basis for determining one or more new values which are received by the gateway and transferred back to the remotely controllable device.

The gateway may provide current values for controllable parameters of the remotely controllable device detected by the mobile terminal by requesting the information from the remotely controllable device when the mobile terminal requests to control the remotely controllable device. However, the gateway may alternatively maintain an up-to-date database of current values for controllable parameters of all remotely controllable devices attached thereto.

Rather than simply providing the current values to the mobile terminal the gateway may provide, to the mobile terminal, a graphical interface representing the controllable parameters of the remotely controllable device. In this case the changes in the spatial position of the mobile terminal are translated, at the mobile terminal, into some intermediate values, which are transferred to the gateway. The gateway receives these intermediate values and uses them for calculating the new values which are ultimately transmitted to the remotely controllable device. At the same time the gateway uses the intermediate values for updating the interface, which is transmitted to the mobile terminal. The interface may for example be implemented as a HTML page that is displayed and refreshed in a web browser window of the mobile terminal, dispensing with the need to install a dedicated control application.

In order to establish an unambiguous end-to-end communication connection between the mobile terminal and the remotely controllable device, the mobile terminal provides identification information about the remotely controllable device it wishes to control when establishing the communication connection with the gateway. The gateway uses this identification information for routing the requests and commands accordingly. As mentioned above, a translation between the mobile terminal and the remotely controllable device may be performed in the gateway, including one or more of protocol translation and translating between different physical connection types.

In an exemplary embodiment the present method is used for providing a dimmer function for a lamp. The mobile terminal uses at least one wireless communication link for controlling a device that is separate from the mobile terminal. In this example an NFC tag is placed at a wall of a room in which the lamp is located. A user brings the mobile terminal close to the NFC tag, e.g. places it against the NFC tag, and the tag and the mobile terminal exchange data for setting up the control connection. The data is used for identifying the device and for authorization and/or authentication. Authorization and authentication may be required for selectively enabling control of remotely controllable devices. This allows for making sure that only certain users have permission to change the light level. The mobile terminal establishes a wireless communication connection with the lamp and requests the current status of the light, e.g. whether the lamp is on or off, its currently set level and/or colour and the like. The status is sent to the mobile device, e.g. as relative value in a range from 0...100%, or as absolute value. The current status may be reflected on the display by an indicator that is accordingly placed on a scale. When the user rotates the mobile device the rotation is translated into a change e.g. of the level and the changed level value is transmitted to the lamp.

The present method may be used for various control functions including controlling lamps, controlling the volume of a radio, or TV, for selecting a radio or TV station, for adjusting the temperature in a room and the like.

In one aspect of the method, as soon as a signal from a signal source is detected the correct user interface for a specific device is automatically launched. When the connection is terminated the user interface is automatically closed.

In a more advanced embodiment of the present method a display shows various controls that can be adjusted by a user, e.g. virtual rotating knobs and sliders. However, the display is not touch enabled, and a user prefers not to use a mouse or a keyboard to access the controls on the display. In accordance with the present method a QR code or a bar code is shown next to each control. A user brings a mobile terminal close to the bar code or QR code, the mobile terminal reads the code and establishes a wireless connection with the respective controlled device to which the control is assigned. The movements of the mobile terminal are translated into changes of the control displayed on the display, e.g. a sliding movement is translated into a virtual slider being operated, and a rotating movement is translated into a virtual rotary encoder being turned. In this advanced embodiment the present method flexibly adds a real-world input device to a virtual or graphical user interface. If the QR code or the bar code is dynamically changed in response to the user's control action the synchronization between the mobile terminal's movement and the display of the controls can be further improved. Likewise, the position and/or orientation of the QR code or the bar code can be adapted in accordance with the user's control action

While the present method has been described hereinbefore using various embodiments and developments one or more of the embodiments and developments can easily be combined to provide a further variant of the present method that is adapted to a user's need and capabilities and/or to a particular remotely controllable device's capacities.

Humans are very well adapted to using rotary encoders or slider controls for controlling things. The present method allows for transforming a mobile terminal a user carries with him/her anyway into a universal means for controlling remotely controllable devices and appliances using a preferred rotary or sliding movement. In addition selective authorization for changing settings can easily be implemented, either in the mobile terminal or in a gateway or a dedicated server for authentication and authorisation. The design of the switch and the characteristic curve of operation, e.g. for lamp dimmers, etc. can be user adjustable to the capability of an individual user to rotate his/her hand and to compensate for shaking or a lower ability to finely adjust and control movements. This allows for every user to carry a universal remote control that is matched his or her personal capabilities and likings, and that is automatically and dynamically reconfigurable and adapted to each individual remotely controllable device.

In the case of light or heater control, inexpensive active or passive NFC tags, Bluetooth beacons or QR codes can be placed where a user desires without having to run mains or control wires, while providing full control over the entire room lighting. The NFC tags, Bluetooth beacons or QR can be easily removed and placed in a different location. The same concept is possible for controlling the volume or other settings of audio devices or television sets. It is also possible to use e-paper displays for providing QR codes, which can be easily reconfigured for adapting the control to other devices, purposes and/or setups, and which e-paper displays do not consume energy whilst in static display mode. If a gateway is used, the reconfiguration may also be had by changing the corresponding assignments in the gateway.

### DESCRIPTION OF THE DRAWINGS

In the following the apparatus and method of the present disclosure will be described with reference to the drawings, in which
- Fig. 1: shows a first exemplary schematic diagram of a system setup that is adapted to perform an embodiment of the present method;
- Fig. 2: shows a second exemplary schematic diagram of a system setup that is adapted to perform an embodiment of the present method;
- Fig. 3: shows an exemplary block diagram of a mobile terminal that can be used in accordance with the present method;
- Figs. 4 & 5: show a first representation of a user interface on a display of mobile terminal currently adapted for controlling a remotely controllable device in a continuous adjusting mode;
- Fig. 4a: shows a second representation of a user interface on a display of mobile terminal currently adapted for controlling a remotely controllable device in a continuous adjusting mode;
- Fig. 5a: shows a third representation of a user interface on a display of mobile terminal currently adapted for controlling a remotely controllable device in a continuous adjusting mode;
- Figs. 6-7a: show similar representations of the user interface on a display of the mobile terminal to the ones shown in figures 4-5a for adjusting a parameter in discrete steps;
- Figs. 8-9: show various representations of values of adjustable parameters of a remotely controllable device on the display of a mobile terminal; and
- Figs. 10-13: show flows of signals, messages and requests in accordance with embodiments of the present method.

### DETAILED DESCRIPTION OF EMBODIMENTS

In the drawings similar or identical elements are referred to by the same reference designators.

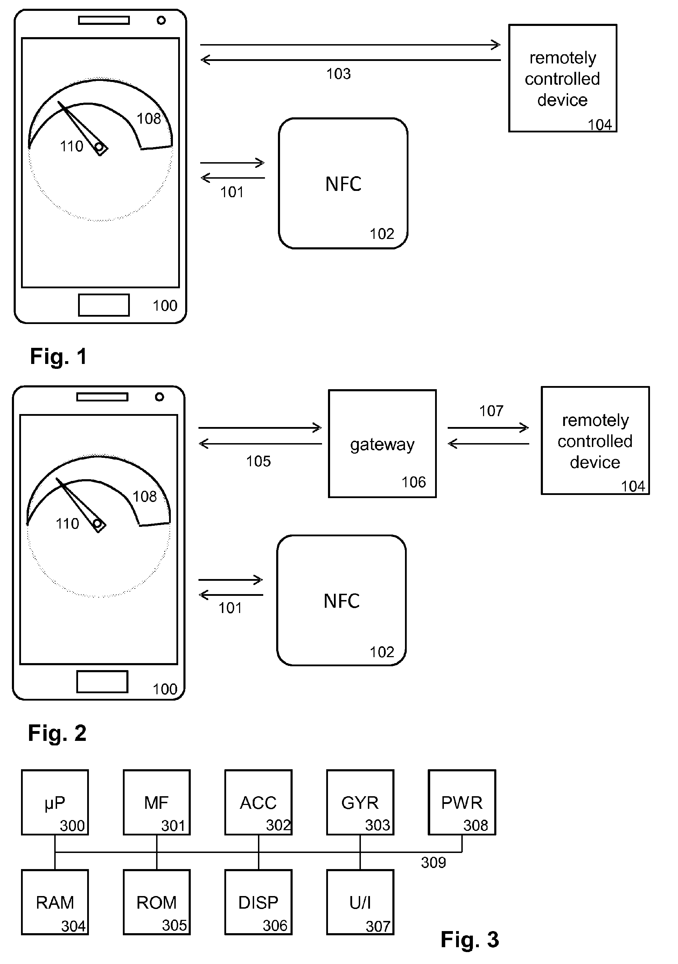

Figure 1 shows a first exemplary schematic diagram of a system setup that is adapted to perform an embodiment of the present method. A mobile terminal 100 is located within communication range of NFC tag 102, activates a communication channel 101 between mobile terminal 100 and NFC tag 102. The mobile terminal 100 receives data identifying an associated remotely controlled device 104. The data identifying the associated remotely controlled device 104 may include an unambiguous address, a communication channel and protocol and the like. Mobile terminal 100 uses the data identifying the associated remotely controlled device 104 for providing a user interface on the screen and for establishing a first communication connection 103 with remotely controlled device 104. Mobile terminal 100 receives, over first communication connection 103, a current value of a remotely controllable adjustable parameter from remotely controlled device 104 and displays an appropriate representation of the adjustable parameter's range and current value. Any new value for the adjustable parameter is transmitted to remotely controlled device 104, which performs an according adjustment. In the figure, the adjustable parameter's range is displayed in the fashion of a crescent 108 having a pointed end representing the lowest value and a wide end representing the highest value. The current value is indicated by pointer 110.

Figure 2 shows a second exemplary schematic diagram of a system setup that is adapted to perform an embodiment of the present method. The second exemplary schematic diagram largely corresponds to the one described with reference to figure 1. However, rather than communicating directly with remotely controlled device 104, mobile terminal 100 communicates with gateway 106 over a second communication connection 105, and gateway 106 communicates with remotely controlled device 104 over a third communication connection 107. The second and third communication connection may be of different types, technologies and/or protocols. Gateway 106 is of generally known construction including interfaces providing the second and third communication connection, a microprocessor and non-volatile and random access memory, and a power supply (not shown in the figure).

Figure 3 shows an exemplary block diagram of a mobile terminal that can be used in accordance with the present method. Microprocessor 300 is connected with magnetic field sensor 301, accelerometer sensor 302, gyroscopic sensor 303, random access memory 304, non-volatile memory 305, display 306, user interface 307 and power supply 308 over one or more data and power bus connections 309. Non-volatile memory 305 stores program instructions which, when executed by microprocessor 300, perform one or more embodiments and/or developments of the present method. It is to be noted that not every element of the exemplary mobile terminal shown in figure 3 needs to be present. For example, only individual ones of the sensors may be present in certain mobile terminals.

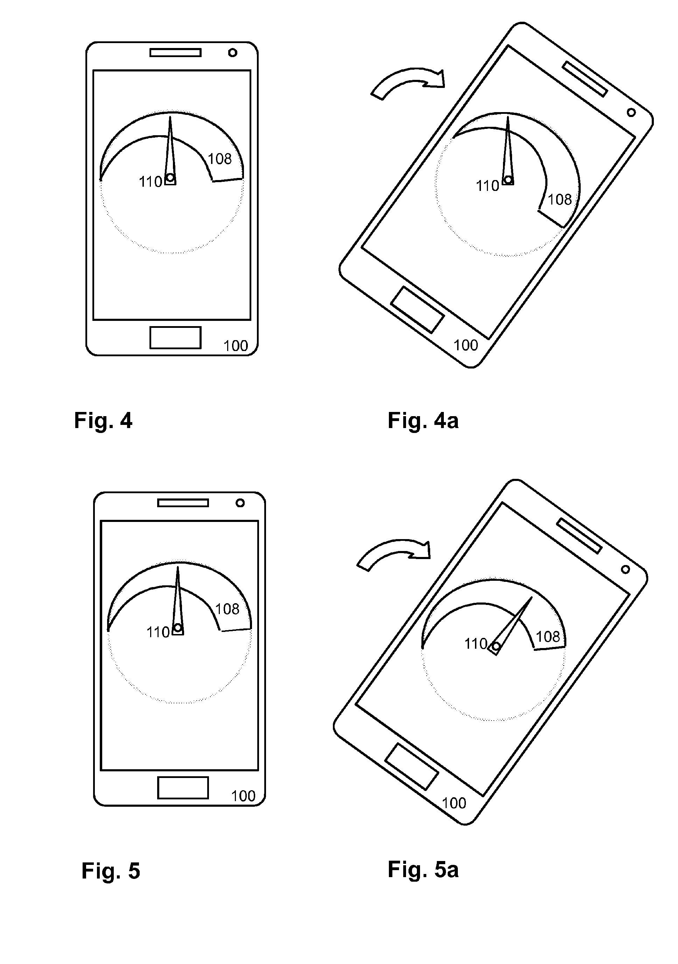

Figure 4 shows a first representation of a user interface on a display of mobile terminal 100 currently adapted for controlling remotely controllable device 104 (not shown in the figure). More specifically, figure 4 shows the initial position of mobile terminal 100 after the communication connection with remotely controlled device 104 has been established and after receiving a current value of an adjustable parameter of remotely controlled device 104. As described in figure 1, the adjustable parameter's range 108 is displayed in the fashion of a crescent, and the current value is indicated by pointer 110. In figure 4, the current value is set at approximately 50% of the full range of the adjustable parameter.

Figure 4a shows a second representation of the user interface on a display of mobile terminal 100 currently adapted for controlling remotely controllable device 104 (not shown in the figure). More specifically, figure 4a shows the position of mobile terminal 100 after a user has rotated mobile terminal 100 in order to remotely control the adjustable parameter of remotely controllable device 104. As shown pointer 110 remains substantially in the same vertical position as in figure 4, and the crescent 108 representing the adjustable parameter's range remains fixed with respect to its orientation on the display of mobile terminal 100. Consequently, pointer 110 appears to have moved to the pointed end of crescent 108. In other words, the new value of the adjustable parameter is lower than the initial value shown in figure 4.

Figure 5 corresponds to figure 4 and illustrates the initial position for the discussion of figure 5a. Figure 5a shows a third representation of the user interface on a display of mobile terminal 100 currently adapted for controlling remotely controllable device 104 (not shown in the figure). More specifically, figure 5a shows the position of mobile terminal 100 after a user has rotated mobile terminal 100 in order to remotely control the adjustable parameter of remotely controllable device 104. In the figure pointer 110 remains substantially fixed with respect to its orientation on the display of mobile terminal 100, and the crescent 108 representing the adjustable parameters range remains substantially in the same position as in figure 5. Consequently, pointer 110 appears to have moved to the wide end of crescent 108. In other words, the new value of the adjustable parameter is higher than the initial value shown in figure 5. The control operation shown in figure 5a can be considered the inverse of the control operation shown in figures 4-4a even though the change in the spatial position of mobile terminal 100 is the same.

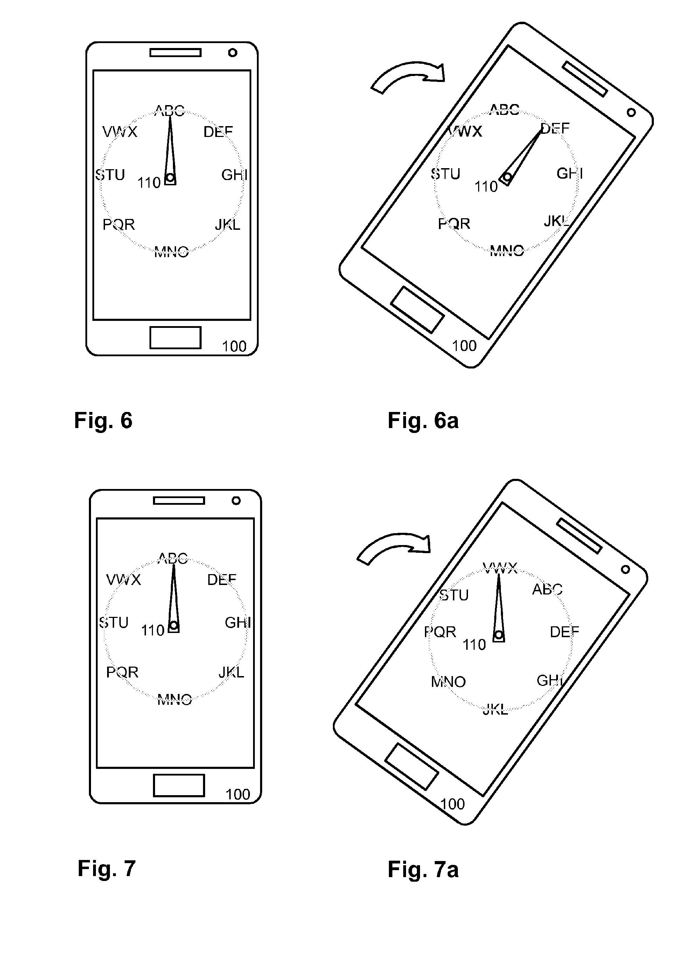

Figures 6, 6a, 7 and 7a show similar representations of the user interface on a display of the mobile terminal 100 to the ones shown in figures 4, 4a, 5 and 5a, respectively. Rather than continuously changing a value of an adjustable parameter in these figures one of a plurality of discrete values or items for an adjustable parameter is selectable, and the mobile terminal functions as a rotary encoder that is used for selecting a discrete value or item. The plurality of selectable values is arranged on the screen in a circular arrangement. However, depending on number of items and general design considerations other arrangements may be used. For example, a section of a circle may be chosen. In figures 6 and 7, an indicator 110 is initially placed on one of the items. This may be the first item in a list, or a currently selected item determined in a similar manner as described further above. For selecting the device is rotated substantially around its centre, and either the pointer is moved from one item to the next item in the direction of movement with the selectable values staying at their respective positions, or the selectable values are moved along the circular line on which they are arranged with the pointer maintaining its position. As described in figures 4-5a these two variants represent inverse control operations. In this embodiment the spatial position of the device, and the change thereof, is determined for example using corresponding input from a magnetic field sensor sending the Earth's magnetic field, and the mobile devices preferably oriented horizontally, with the display surface essentially parallel to the Earth's surface.

The absolute reading of the magnetic field sensor is irrelevant, thus, unlike for proper operation of a compass function, no calibration is needed. However, the initial position may be "nulled" automatically or manually or when the selection screen is opened or started.

Generally, accelerometer or gyro input may likewise be used for detecting the rotary movement, or for complementing the sensor data for improved accuracy.

When the device is held with the surface of the display essentially perpendicular to the earth's surface, e.g. up against a wall, the sensors used for implementing a level may be used for detecting the rotation of the device.

Each new selection may be additionally indicated optically, e.g., by flashing the display screen, highlighting the now-selected item, etc., indicated acoustically, e.g., by playing back a clicking sound or the like, and/or indicated haptically, e.g., by vibrating the mobile terminal.

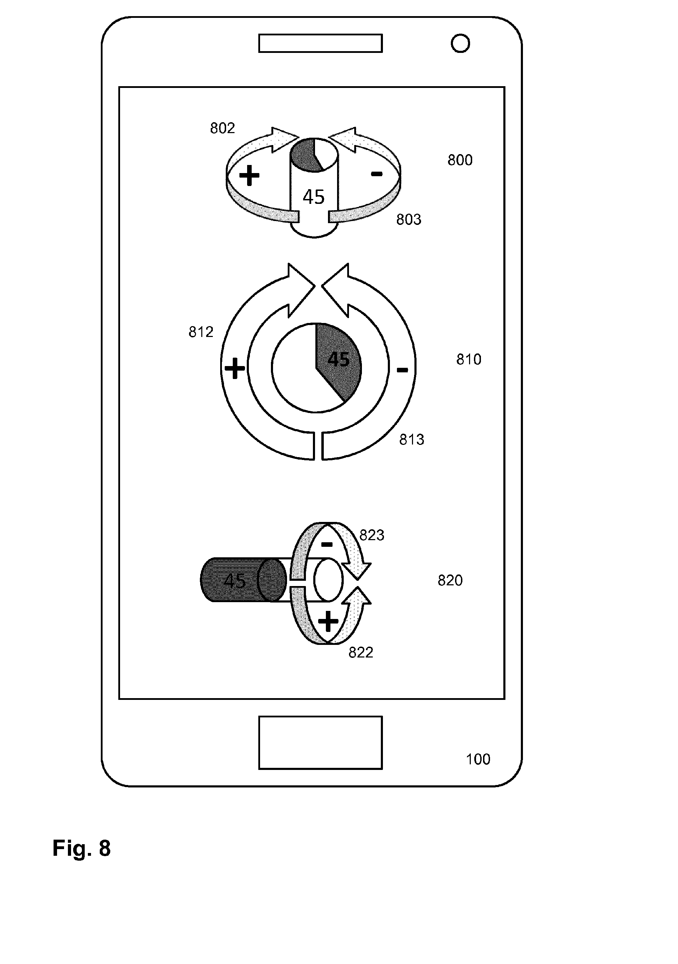

Figure 8 shows various representations of values of adjustable parameters of a remotely controllable device 104 on the display of mobile terminal 100. The top representation 800 provides information about the current value of the adjustable parameter and information on how to change the spatial position of mobile terminal 100 to change the value of the adjustable parameter. Two curved arrows 802, 803 arranged a perspective view and labelled "+" and "-" and the representation of the value of the adjustable parameter in a corresponding perspective view gives the user an indication that, in order to change the value, mobile terminal 100 is to be rotated around an axis parallel to the long side of the display.

Similarly, the middle representation 810 provides a clear indication to the user that, in order to change the value, mobile terminal 100 is to be rotated around an axis perpendicular to the surface of the display. The direction of rotation for increasing or decreasing the value is indicated by arrows 812, 813.

Similarly, the bottom representation 820 provides an indication to the user that, in order to change the value, mobile terminal 100 is to be rotated around an axis parallel to the short side of the display. The direction of rotation for increasing or decreasing the value is indicated by arrows 822, 823 shown in a perspective view.

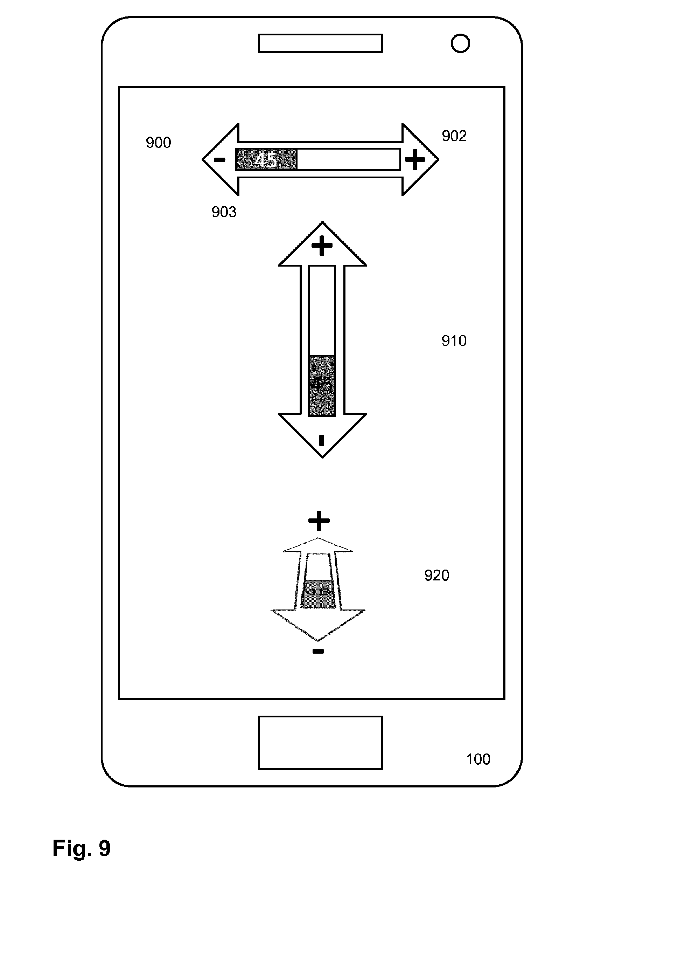

Figure 9, similar to figure 8, shows various representations of values of adjustable parameters of a remotely controllable device 104 on the display of mobile terminal 100. The top representation 900 provides information about the current value of the adjustable parameter and information on how to change the spatial position of mobile terminal 100 to change the value of the adjustable parameter. In this representation the value is shown as a bar graph and the numerical value is also shown. The direction in which to move mobile terminal 100 is indicated by the arrows 902, 903 and the "+" and "-" signs. The representation of the value of the adjustable parameter shows the user that, rather than a rotation of mobile terminal 100 that was required in the representations shown in figure 8, a substantially translatory movement to the left or to the right of mobile terminal 100, parallel to the short side and to the surface of the display, is required for changing the value.

Similarly, the middle representation 910 provides an indication to the user that, in order to change the value, a translatory movement of mobile terminal 100 up or down, parallel to the long side and to the surface of the display, is required for changing the value.

Similarly, the bottom representation 920 provides an indication to the user that, in order to change the value, mobile terminal 100 is to be moved in a direction perpendicular to the surface of the display, i.e. back and forth, for changing the value.

Depending on the number of values that can be adjusted in the remotely controllable device each of these representations can be shown individually on the screen of mobile terminal 100 or in any combination.

If values of several adjustable parameters can be changed in a remotely controllable device it is possible to either accept only one input are changing a value at the time or to accept simultaneous inputs for two or more parameters. For example, if the colour of a remotely controllable light source can be changed in the RGB space translatory movement or the rotation of mobile terminal 100 in each of the directions may be detected simultaneously and corresponding changes of the RGB values may be transmitted to the remotely controllable light source simultaneously. An approximation of the resulting colour could be used as a background colour of the display.

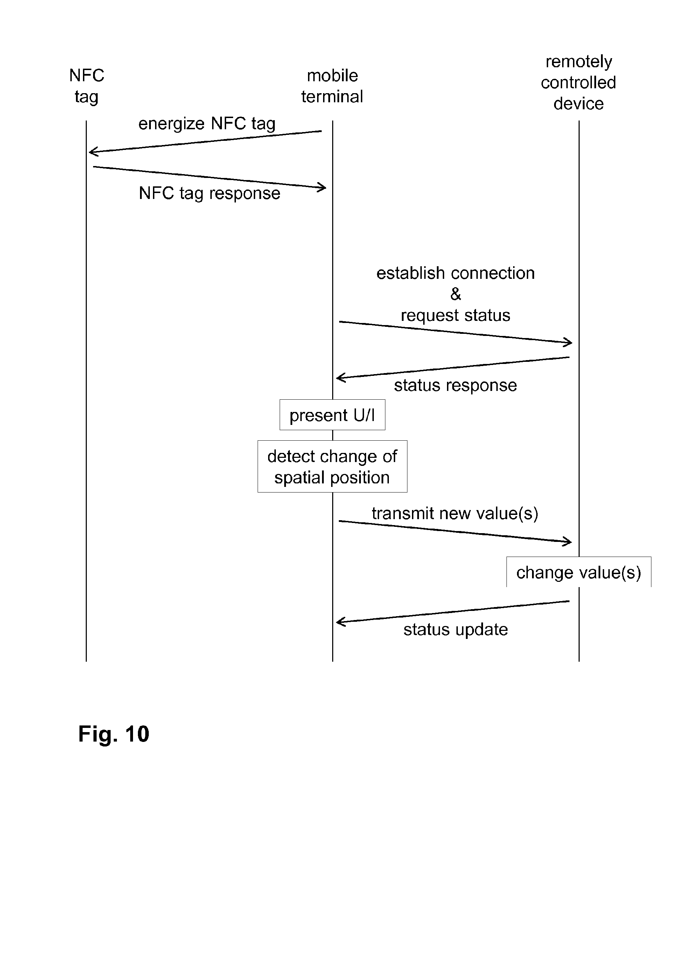

Figure 10 shows a flow of signals, messages and requests in accordance with an embodiment of the present method. At first the mobile terminal detects proximity to an NFC tag. In the case of a passive NFC tag the mobile terminal energises the NFC tag, which responds accordingly. The NFC tag's response carries the unique identifier of a remotely controllable device and may also carry information for establishing a communication connection between the mobile terminal and the remotely controllable device. However, as has been explained previously, the information for establishing the communication connection between the mobile terminal and the remotely controllable device may also be obtained from a database. Upon receiving the identifier of the remotely controlled device the mobile terminal establishes a communication connection and requests the current status of the remotely controlled device, i.e. current values of one or more adjustable parameters. The remotely controlled device answers the request by a status response to the mobile terminal. The mobile terminal, upon receiving one or more current values of one or more adjustable parameters of the remotely controllable device in the status response, presents a corresponding user interface, for example using one or more of the representations discussed further above with reference to figures 4 to 9. The mobile terminal subsequently detects a change of its spatial position, translates the change into a change of the values of one or more adjustable parameters, and transmits new values for the one or more adjustable parameters to the remotely controlled device. The remotely controlled device receives the new values, adjusts the one or more parameters accordingly, and optionally provides a status update to the mobile terminal.

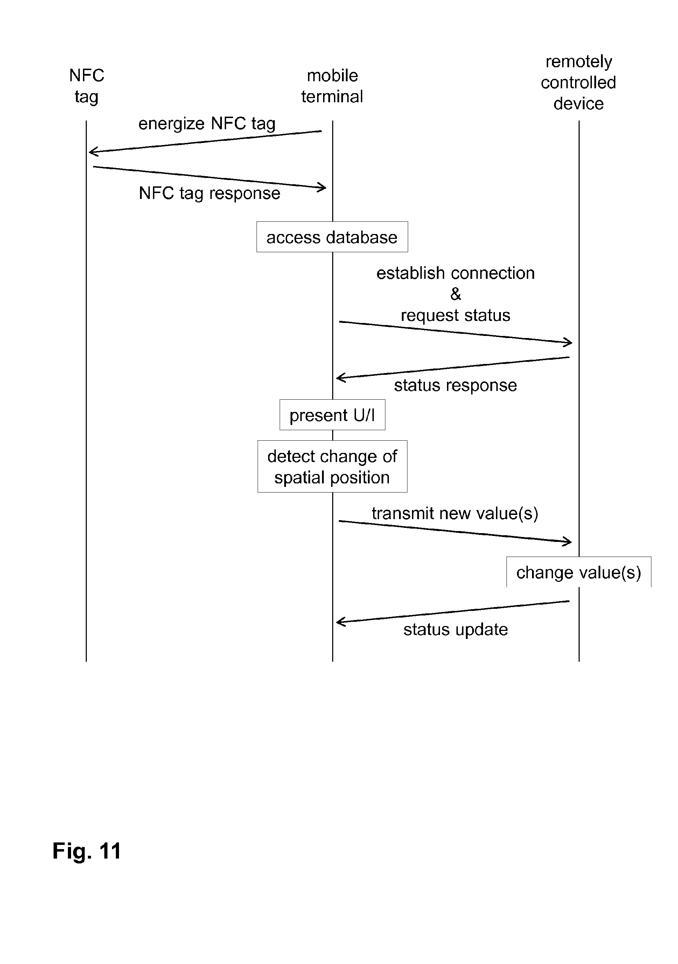

Figure 11 shows a flow of signals in a setup in which the NFC tag's response does not carry information for establishing a communication connection between the mobile terminal and the remotely controllable device. In this variant the mobile terminal receives only an identifier of a remotely controllable device and accesses a database for obtaining the information for establishing a communication connection between the mobile terminal and the remotely controllable device. The remaining signal exchanges are similar to the exchanges shown in figure 10 and will not be repeated for brevity. It is to be noted that the database may be located in the mobile terminal or in a separate device that is accessible by the mobile terminal, e.g., a gateway device or a dedicated server providing according information. Access to the database may be made through any wireless communication and is not necessarily limited to the same type of wireless communication that is used for controlling the remotely controllable device.

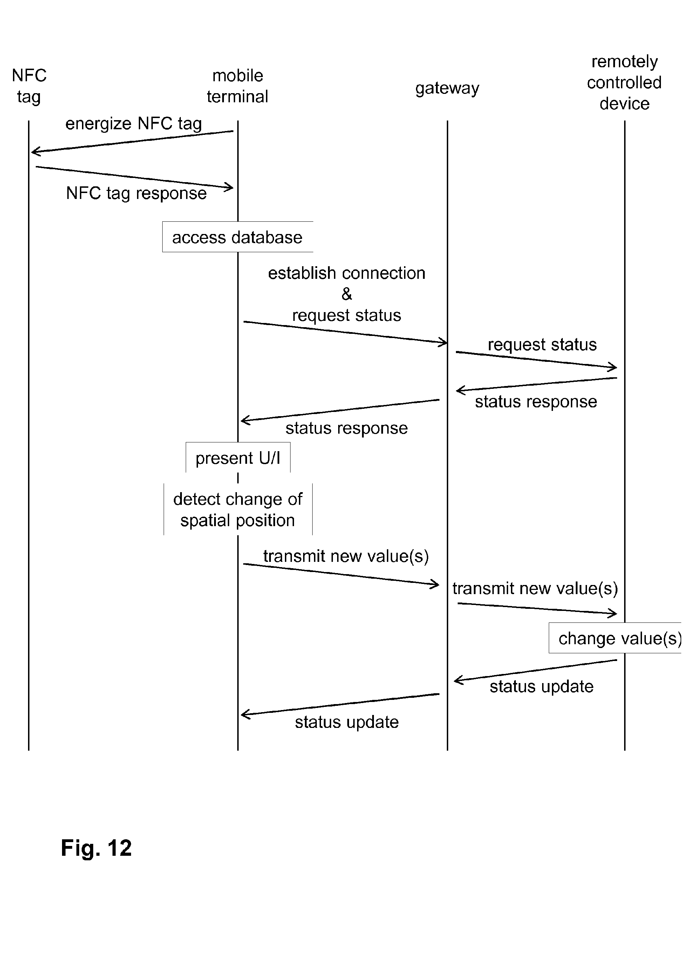

Figure 12 shows a flow of signals in a setup that is using a gateway in the communication path between the mobile terminal and the remotely controllable device. Similar to figure 10, the mobile terminal detects proximity to an NFC tag. In the case of a passive NFC tag the mobile terminal energises the NFC tag, which responds accordingly. The NFC tag's response carries the unique identifier of a remotely controllable device. Using this identifier the mobile terminal obtains information for establishing a communication connection between the mobile terminal and the remotely controllable device. However, as previously shown in figure 10, the information for establishing the communication connection between the mobile terminal and the remotely controllable device may also be provided in the NFC tag's response.

In this exemplary embodiment the information allows for establishing a communication connection to a gateway rather than directly to the remotely controllable device. The gateway receives requests from the mobile terminal, translates the request into a form that is suitable for the remotely controllable device, and forwards the translated request to the remotely controllable device. The translation may include a simple protocol translation and/or using different physical communication channels between mobile terminal and gateway and between the gateway and the remotely controllable device. The gateway may also provide a unified user interface that is independent from a manufacturer of the remotely controllable device.

As in the previous examples, upon receiving the identifier of the remotely controlled device and the information required for establishing a communication connection, the mobile terminal establishes a communication connection with the gateway and requests the current status of the remotely controlled device, i.e. current values of one or more adjustable parameters.

The gateway forwards the status request to the remotely controlled device, after appropriate translation, if any. The remotely controlled device answers the request by a status response to the gateway, which is translated, if required, and forwarded to the mobile terminal. The mobile terminal, upon receiving one or more current values of one or more adjustable parameters of the remotely controllable device in the status response, presents a corresponding user interface, for example using one or more of the representations previously discussed with reference to figures 4 to 9. The mobile terminal subsequently detects a change of its spatial position, translates the change into a change of the values of one or more adjustable parameters, and transmits new values for the one or more adjustable parameters to the gateway. The gateway forwards the new values for the one or more adjustable parameters to the remotely controlled device in the same manner as previously described for the status request. The remotely controlled device receives the new values, adjusts the one or more parameters accordingly, and optionally provides a status update to the gateway and ultimately to the mobile terminal.

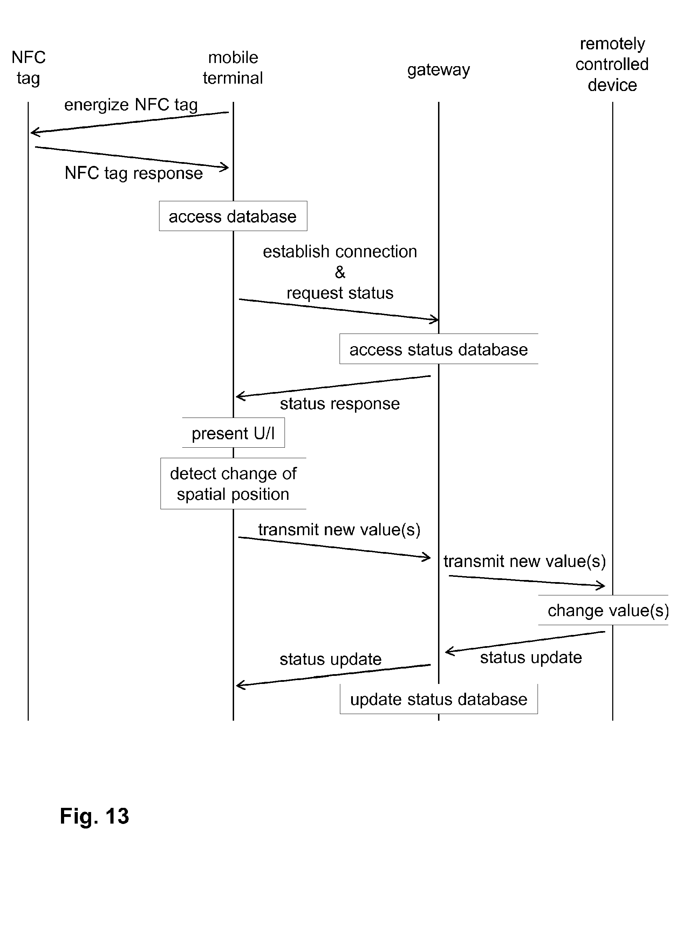

Figure 13 shows a flow of signals similar to the flow of signals in figure 12. However, in this signal flow and general setup of the corresponding system the gateway maintains a database of status information of all remotely controllable devices that can be accessed. The database is updated by the gateway either independent from actual remote control actions, e.g. at certain intervals (not shown in the figure) and/or whenever a remotely controllable device is accessed by a mobile terminal. The remaining signal flow corresponds to the signal flow in figures 10 to 12 and is not repeated here for conciseness.

As previously discussed, in any of the exemplary embodiments the mobile terminal may continue detecting proximity to the NFC tag while the control operation is ongoing (not shown in the figures). This may be useful to determine when a user wishes to terminate the control operation and to avoid translation of movements of the mobile terminal into changes of the values of adjustable parameters after the control operation is terminated. However, termination of the control operation may also be inferred by various actions, including but not limited to the expiration of a timer, the user holding the end position after the control operation for a brief moment, a dedicated movement of the mobile terminal, or the like.

In the foregoing various embodiments have been described with the signal source being an NFC tag. However, as known by one skilled in the art the signal source may be, but is not limited to, a QR code, a Bluetooth beacon, or the like. The changes in the signal flow due to the use of a different signal source are known by those skilled in the art.

All statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Reference in the specification to "one embodiment" or "an embodiment" of the present principles, as well as other variations thereof, means that a particular feature, structure, characteristic, and so forth described in connection with the embodiment is included in at least one embodiment of the present principles. Thus, the appearances of the phrase "in one embodiment" or "in an embodiment", as well any other variations, appearing in various places throughout the specification are not necessarily all referring to the same embodiment.

It is to be understood that the present principles may be implemented in various forms of hardware, software, firmware, special purpose processors, or a combination thereof. Preferably, the present principles may be implemented as a combination of hardware and software. Moreover, the software is preferably implemented as an application program tangibly embodied on a program storage device. The application program may be uploaded to, and executed by, a machine comprising any suitable architecture. Preferably, the machine is implemented on a computer platform having hardware such as one or more central processing units (CPU), a random access memory (RAM), and input/output (I/O) interface(s). The computer platform also includes an operating system and microinstruction code. The various processes and functions described herein may either be part of the microinstruction code or part of the application program (or a combination thereof) that is executed via the operating system.

It is further to be understood that, because some of the constituent system components and method steps depicted in the accompanying figures are preferably implemented in software, the actual connections between the system components (or the process steps) may differ depending upon the manner in which the present principles is programmed. Given the teachings herein, one of ordinary skill in the related art will be able to contemplate these and similar implementations or configurations of the present principles.

## Claims

1. A method of remotely controlling a device (104) using a mobile terminal (100), comprising:
- detecting a signal source (102) providing an identification of the device (104);
- establishing a wireless communication connection (103) between the mobile terminal (100) and the device (104) in response to detecting the signal source (102);
- determining an initial spatial position of the mobile terminal (100);
- detecting a subsequent change in the spatial position of the mobile terminal (100);
- translating the change in the spatial position into at least one new value for at least one controllable parameter of the device (104); and
- transmitting the at least one new value to the device (104).

2. The method of claim 1, wherein establishing the wireless communication connection (103) between the mobile terminal (100) and the device (104) is based upon at least one of connection parameters provided by the detected signal source (102) and connection parameters retrieved from a database that stores such connection parameters for the identification provided by the signal source (102).

3. The method of claim 1, wherein the wireless communication connection (103) is operative only after at least one of an authentication and authorization of the mobile terminal (100) to the device (104).

4. The method of claim 1, further comprising:
- establishing the wireless communication connection (103) only after at least one of the signal source (102) being detected during a time period that is longer than a predetermined first time period and receiving a corresponding user input; and/or
- terminating the wireless communication connection (103) after at least one of the signal not being detected for a predetermined second time period, no substantive change in the spatial position of the mobile terminal (100) having been detected within a predetermined time period and receiving a corresponding user input.

5. The method of claim 1, wherein the at least one new value represents a relative change of the at least one controllable parameter.

6. The method of claim 1, further comprising:
- receiving at least one current value of at least one controllable parameter of the device (104) via the communication channel (103), wherein the at least one new value represents an absolute value of the at least one controllable parameter.

7. The method of claim 6, further comprising:
- reproducing the at least one current value of the at least one controllable parameter received from the device (104) on a display, wherein a change of the at least one current value to the at least one new value for the at least one parameter transmitted to the device (104) is displayed on the display in at least one of gradually and discrete steps.

8. The method of claim 7, wherein the at least one current value of the at least one controllable parameter received from the device (104) is reproduced on a display in such a way that the change in the spatial position required to change the value of the at least one parameter is indicated as at least one of a rotational and a translatory change of the spatial position.

9. The method of claim 1, further comprising:
- receiving a list of items representing selectable values of at least one controllable parameter of the device (104);
- providing at least one item from the list of items on a screen of the mobile terminal (100) in at least one of an arc-like and a circular arrangement, and providing a selector icon (110) that indicates a currently selected item;
- at least one of:
placing the selector icon (110) on a new selected item in the at least one of arc-like and circular arrangement and
rotating the at least one of arc-like and circular arrangement of items so that a next item is placed where the selector icon (110) indicates
selection,
in accordance with the change of the spatial position of the mobile terminal (100); and
- transmitting the new selected item as new value to the device (104).

10. The method of claim 1, wherein detecting a change in the spatial position is performed continuously or at intervals, and wherein the translation of the change in the spatial position into at least one new value for the at least one controllable parameter and the transmission of the corresponding at least one new value is performed substantially concurrently.

11. The method of any one or more of the preceding claims, wherein the wireless communication connection (105) is established between the mobile terminal (100) and a gateway (106), wherein the gateway is communicatively connected to the device by at least one of a wired or a wireless connection (107), wherein the method comprises:
- providing, to the mobile terminal (100), at least one of current values and an interface representing the controllable parameters of the device (104) associated with the signal source (102) detected by the mobile terminal (100);
- receiving at least one new value for the device (104) from the mobile terminal (100);
- forwarding the at least one new value to the device (104), and, if an interface is provided to the mobile terminal (100), updating the interface and providing an updated interface to the mobile terminal (100).

12. The method of claim 11, further comprising:
- verifying permission of the mobile terminal (100) to control the device (104) prior to providing at least one of current values and an interface to the mobile terminal (100).

13. A mobile terminal (100) including, connected by at least one data connection (309), a microprocessor (300), a random access memory (304), a non-volatile memory (305) and at least one of a magnetic field sensor (301), an accelerometer sensor (302) and a gyroscope sensor (303), wherein the random access memory (304) stores instructions that, when executed by microprocessor (300), cause the mobile terminal to execute the method of any one of the preceding claims 1 to 10.

14. A gateway device (106) including a microprocessor, a random access memory, a non-volatile memory and at least one interface adapted to provide at least one communication connection (105) with a mobile terminal in accordance with claim 13 and with at least one device (104), wherein the random access memory stores instructions that, when executed by the microprocessor, cause the gateway (106) device to
- provide, to the mobile terminal (100), at least one of a current values and an interface representing controllable parameters of a device (104) associated with a signal detected by the mobile terminal (100);
- receive at least one new value for the device (104) from the mobile terminal (100);
- forward the at least one new value to the device (104), and, if an interface is provided to the mobile terminal (100), update the interface and provide an updated interface to the mobile terminal (100).
